# EUROPEAN PATENT APPLICATION

(11) **EP 4 787 810 A1**
(43) Date of publication of application: **05.08.2026**
(21) Application number: 24870339.9
(22) Date of filing: 02.09.2024
(51) Int. Cl.: H04L 47/625

(54) **POLICY DETERMINATION METHOD AND APPARATUS, COMMUNICATION DEVICE AND READABLE STORAGE MEDIUM**

(30) Priority: 27.09.2023 CN 202311264263
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Peng, Beijing 100032 (CN); DU, Zongpeng, Beijing 100032 (CN); LI, Zhiqiang, Beijing 100032 (CN)
(74) Representative: Herrero & Asociados, S.L.
(86) International application number: PCT/CN2024/116215
(87) International publication number: WO 2025/066793

(57) **Abstract**

The present disclosure relates to the technical field of communications and provides a policy determination method and apparatus, a communication device and a readable storage medium. The policy determination method in embodiments of the present disclosure comprises: a downstream network node receiving a plurality of first messages sent by a plurality of upstream network nodes, wherein each first message comprises queue information of a corresponding upstream network node; on the basis of the queue information of the plurality of upstream network nodes and queue information of the downstream network node, determining a message sending policy from the plurality of upstream network nodes to the downstream network node; and sending a second message to the plurality of upstream network nodes respectively, wherein the second message comprises an identifier used for indicating the message sending policy.

## Description

### CROSS-REFERENCE TO RELATED APPLICATIONS

The present disclosure claims foreign priority to Chinese Patent Application No. 202311264263.9, filed on September 27, 2023, the contents of which are hereby incorporated by reference in its entirety.

### TECHNICAL FIELD

The present disclosure relates to the technical field of communication technologies, and in particular to a policy determination method, an apparatus, a communication device, and a readable storage medium.

### BACKGROUND

In the related art, a deterministic network guarantees deterministic transmission of data packets via a series of technologies such as resource reservation and queue scheduling. A cyclic queue scheduling method includes selecting 2 or 3 queues for cyclic and periodic transmission and reception, only one queue being allowed to transmit in each time period, and the remaining queues being in a state of receiving packets. However, based on the current cyclic queue scheduling method, in a case where packets in the deterministic network pass through a plurality of devices and packets from a plurality of upstream network nodes enter a same downstream network node, i.e., in a case where a plurality of packet paths converge, random corresponding relationship between upstream queues and downstream queues may occur, thereby failing to guarantee deterministic transmission of the packets.

### SUMMARY

A purpose of embodiments of the present disclosure is to provide a policy determination method, an apparatus, a communication device, and a readable storage medium, to solve a problem in the related art that deterministic transmission of packets cannot be guaranteed currently when packets from a plurality of upstream network nodes enter a same downstream network node.

In order to solve the above technical problems, the present disclosure is implemented as follows.

In a first aspect, a policy determination method is provided and includes: a downstream network node receiving a plurality of first packets sent from a plurality of upstream network nodes, each first packet including queue information of a corresponding upstream network node of the plurality of upstream network nodes; the downstream network node determining a packet sending policy from the plurality of upstream network nodes to the downstream network node based on the queue information of the plurality of upstream network nodes and queue information of the downstream network node; and the downstream network node sending a second packet to the plurality of upstream network nodes respectively, the second packet including an identifier configured to indicate the packet sending policy.

In a second aspect, a policy determination method is provided and includes: a control network node acquiring queue information of each of a plurality of upstream network nodes; the control network node acquiring queue information of a downstream network node corresponding to the plurality of upstream network nodes; and the control network node determining a packet sending policy from the plurality of upstream network nodes to the downstream network node based on the queue information of each of the plurality of upstream network nodes and the queue information of the downstream network node.

In a third aspect, a policy determination apparatus is provided and includes: a receiving module, configured to receive a plurality of first packets sent from a plurality of upstream network nodes; each of the first packets includes queue information of a corresponding upstream network node of the plurality of upstream network nodes; a first determining module, configured to determine a packet sending policy from the plurality of upstream network nodes to a downstream network node based on the queue information of the plurality of upstream network nodes and queue information of the downstream network node corresponding to the plurality of upstream network nodes; and a sending module, configured to send a second packet to the plurality of upstream network nodes respectively; the second packet includes an identifier configured to indicate the packet sending policy.

In a fourth aspect, a policy determination apparatus is provided and includes: a first acquisition module, configured to acquire queue information of each of a plurality of upstream network nodes; a second acquisition module, configured to acquire queue information of a downstream network node corresponding to the plurality of upstream network nodes; and a second determining module, configured to determine a packet sending policy from the plurality of upstream network nodes to the downstream network node based on the queue information of each of the plurality of upstream network nodes and the queue information of the downstream network node.

In a fifth aspect, a communication device is provided and includes a processor, a memory, and a program or an instruction stored in the memory and executable on the processor; the program or the instruction, when executed by the processor, implements the operations of the policy determination method in the first aspect, or implements the operations of the policy determination method in the second aspect.

In a sixth aspect, a readable storage medium is provided and stores a program or an instruction; the program or the instruction, when executed by a processor, implements the operations of the policy determination method in the first aspect, or implements the operations of the policy determination method in the second aspect.

In the embodiment of the present disclosure, a downstream network node receive a plurality of first packets sent from a plurality of upstream network nodes, each of the first packets includes queue information of a corresponding upstream network node of the plurality of upstream network nodes, determines a packet sending policy from the plurality of upstream network nodes to the downstream network node based on the queue information of the plurality of upstream network nodes and queue information of the downstream network node, and sends a second packet to the plurality of upstream network nodes respectively, the second packet includes an identifier configured to indicate the packet sending policy. Thus, the downstream network node may be performed capability enhancement, so that the downstream network node may identify the capabilities of upstream queues and downstream queues via interaction with the plurality of upstream network nodes, determine the packet sending policy from the plurality of upstream network nodes to the downstream network node and configures the packet sending policy for the upstream network nodes, thereby guaranteeing deterministic transmission of packets during multi-path convergence.

### BRIEF DESCRIPTION OF THE DRAWINGS

FIG. 1 is a schematic diagram of cyclic queue scheduling according to some embodiments of the present disclosure.
FIG. 2 is a schematic diagram of a resource reservation process according to some embodiments of the present disclosure.
FIG. 3 is a flowchart of a policy determination method according to some embodiments of the present disclosure.
FIG. 4A is a schematic diagram of packet forwarding in a policy 1 according to some embodiments of the present disclosure.
FIG. 4B is a schematic diagram of packet forwarding in a policy 2 according to some embodiments of the present disclosure.
FIG. 4C is a schematic diagram of packet forwarding in a policy 3 according to some embodiments of the present disclosure.
FIG. 5 is a schematic diagram of an RSVP-TE protocol format according to some embodiments of the present disclosure.
FIG. 6A and FIG. 6B are schematic diagrams of resource reservation packets according to some embodiments of the present disclosure.
FIG. 7 is a flowchart of a policy determination method according to some embodiments of the present disclosure.
FIG. 8 is a schematic diagram of a packet transmission process according to some embodiments of the present disclosure.
FIG. 9 is a structural schematic diagram of a policy determination apparatus according to some embodiments of the present disclosure.
FIG. 10 is a structural schematic diagram of a policy determination apparatus according to some embodiments of the present disclosure.
FIG. 11 is a structural schematic diagram of a communication device according to some embodiments of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some, but not all, of the embodiments of the present disclosure. Based on the embodiments in the present disclosure, all other embodiments obtained by those skilled in the art without creative efforts fall within the scope of the present disclosure.

The terms "first", "second", and the like in the specification and claims of the present disclosure are used to distinguish similar objects and are not used to describe a particular order or sequence. It should be understood that the data used in this way are interchangeable under appropriate circumstances so that the embodiments of the present disclosure may be implemented in a sequence other than those illustrated or described herein, and the objects distinguished by "first", "second", and the like are of one type, and the number of objects is not limited. For example, there may be one or more first objects. In addition, "and/or" in the specification and claims represents at least one of the connected objects, and the character "/" represents an "or" relationship between the associated objects.

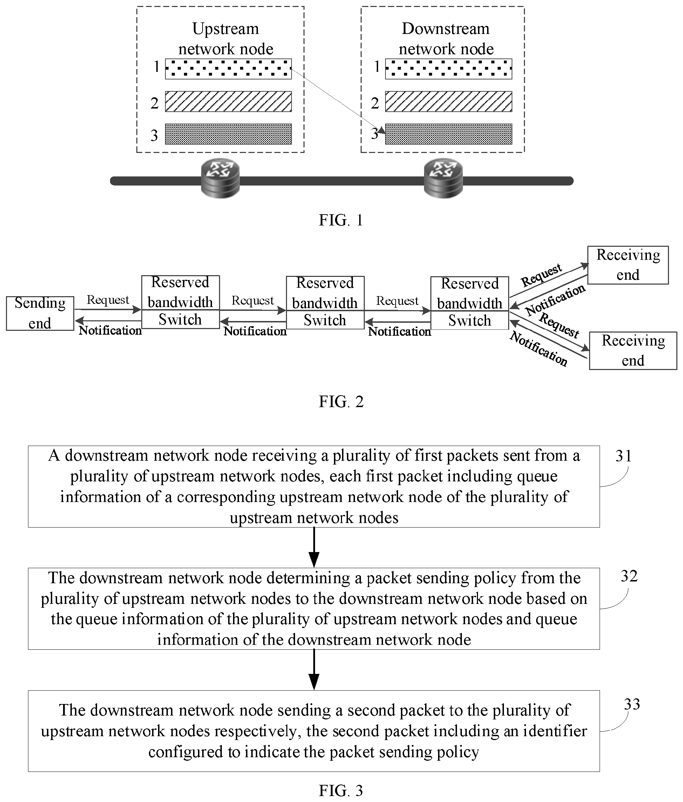

In some embodiments of the present disclosure, for cyclic queue scheduling, 2-3 queues may be selected for cyclic and periodic transmission and reception, only one queue is allowed to transmit in each time period, and the remaining queues are in a state of receiving packets. As shown in FIG. 1, a network node including 3 queues is taken as an example, and it is assumed that in the 3 queues, queue 1 is a sending queue, queue 2 is a to-be-sent queue (i.e., a waiting queue), and queue 3 is a waiting queue, and the sequence of queue cycling is: 1 -- 3 -- 2 -- 1, so that, 1) after queue 1 finishes sending, queue 1 changes to queue 3 and starts receiving packets; 2) queue 2 switches to queue 1 and starts sending packets; 3) queue 3 switches to queue 2 and continues receiving packets.

The characteristics of the cyclic queue scheduling shown in FIG. 1 at least include the following:
(1) the delay of the cyclic queue is equal to the queue switching period T * hop counts;
(2) packets from the same queue of an upstream network node will all be sent to the same queue of a downstream network node, which may be simply regarded as "batch processing";
(3) packets that start being sent from the sending queue of the upstream network nodes will all be sent to the last queue of the downstream network node to ensure that the packets may all be received;
(4) during implementation, a set of test flows is required to be sent first and traverse all network nodes, to obtain the corresponding relationship between upstream queues and downstream queues;
(5) any queue serving as queue 2 has already undergone the duration of serving as queue 3, i.e., the queue has received some packets sent from an upstream node, but has not finished receiving.

Resource reservation is regarded as a key technology configuration solution for a deterministic network. To solve the bandwidth contention problem caused by the simultaneous arrival of real-time data flows and ordinary data flows at a network node, end-to-end bandwidth reservation management for data from a source network node to a destination network node may be implemented, thereby guaranteeing the quality of service (QoS) and delay requirements of the real-time data flows.

As shown in FIG. 2, the resource reservation process may include:
(a) a sending end (e.g., a client) initiates a resource reservation request (e.g., a PATH packet); after a path is determined, the request is sent along the path via switches to a receiving end (e.g., a client); the request carries requirements for the network (e.g., delay, etc.);
(b) the receiving end (e.g., the client), based on the request from the sending end, calculates resources such as a bandwidth that is required to be reserved by the network, and returns a packet (e.g., a RESV packet) along the original path and notifies devices one by one to reserve resources.

In some embodiments, the packet may be referred to as traffic.

In some embodiments, an applicable scenario may include, but is not limited to a deterministic network, such as a time sensitive networking (TSN), or a deterministic network (DetNet), etc.

The policy determination method, the apparatus, the communication device, and the readable storage medium provided the embodiments of the present disclosure may be described in detail below with reference to the accompanying drawings via some embodiments and application scenarios thereof.

Please refer to FIG. 3. FIG. 3 is a flowchart of a policy determination method according to some embodiments of the present disclosure. The method may be performed by a downstream network node, which may be referred to as a convergence network node. As shown in FIG. 3, the method may include the following operations.

An operation 31 may include: a downstream network node receiving a plurality of first packets sent from a plurality of upstream network nodes, each first packet including queue information of a corresponding upstream network node of the plurality of upstream network nodes.

An operation 32 may include: the downstream network node determining a packet sending policy from the plurality of upstream network nodes to the downstream network node based on the queue information of the plurality of upstream network nodes and queue information of the downstream network node.

An operation 33 may include: the downstream network node sending a second packet to the plurality of upstream network nodes respectively, the second packet including an identifier configured to indicate the packet sending policy.

In some embodiments of the present disclosure, each of the first packet and the second packet may be a resource reservation packet, for example, the first packet may be a PATH packet, and the second packet may be a RESV packet. Each of the plurality of upstream network nodes may send the first packet to the downstream network node to inform the downstream network node of the queue information of the corresponding upstream network node.

In some embodiments, each of the first packet and the second packet may be extended via the resource reservation protocol (RSVP) to provide required additional resources while guaranteeing resources such as a bandwidth.

In some embodiments, the queue information may include the number of queues.

Thus, with the solutions in some embodiments of the present disclosure, the downstream network node may be performed capability enhancement, so that the downstream network node may identify the capabilities of upstream queues and downstream queues via interaction with the plurality of upstream network nodes, determine the packet sending policy from the plurality of upstream network nodes to the downstream network node and configures the packet sending policy for the upstream network nodes, thereby implementing cyclic queue forwarding at the convergence network node and guaranteeing deterministic transmission of packets during multi-path convergence.

In some embodiments of the present disclosure, different packet sending policies may be formed based on different capabilities of upstream queues and downstream queues, which are described as follows.

### Policy 1

This policy 1 corresponds to an optimal situation, and one queue of the downstream network node may receive packets at once from queues of a plurality of upstream network nodes or completely receive packets from the queues of a plurality of upstream network nodes.

In some embodiments, the above operation 32 may include: in a case where it is determined that packets in queues of the plurality of upstream network nodes are able to be received at once by one queue of the downstream network node based on the queue information of the plurality of upstream network nodes and the queue information of the downstream network node, the downstream network node determining the packet sending policy from the plurality of upstream network nodes to the downstream network node may include: non-sequentially sending the packets from the corresponding queues of the plurality of upstream network nodes to the one queue of the downstream network node. That is, the corresponding queues of a plurality of upstream network nodes are merged into one queue, and the sending sequence is not required to be considered. Thus, the upstream network nodes are not required to sequentially send packets of the current queue, and the packets in the corresponding queues of the upstream network nodes are not sent to a plurality of queues of the downstream network node, thereby reducing resource waste. It should be noted that in some embodiments of the present disclosure, a network node may be simply referred to as a node.

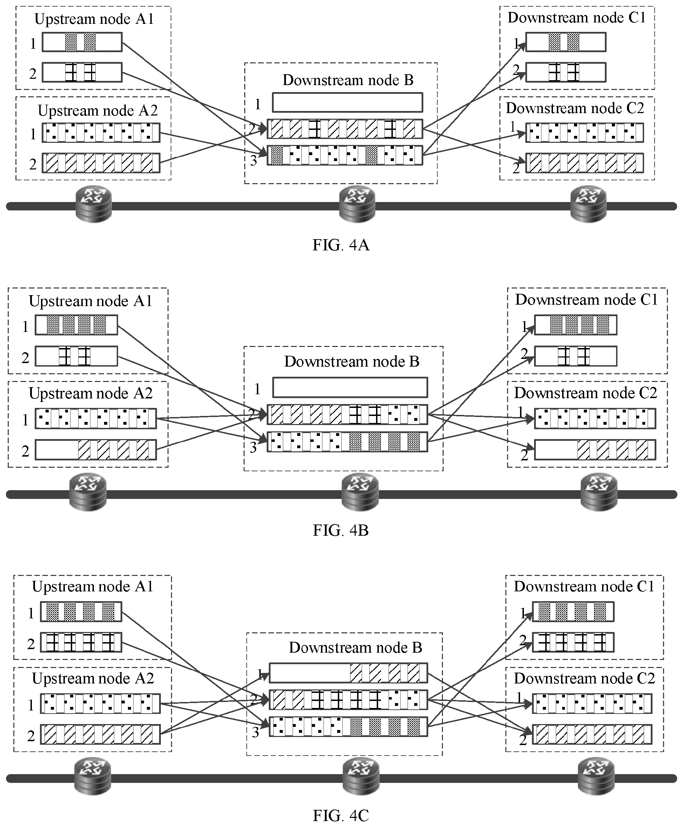

For example, as shown in FIG. 4A, in a case where upstream node A1 includes queue 1 and queue 2, upstream node A2 includes queue 1 and queue 2, and downstream node B includes queue 1, queue 2, and queue 3, the corresponding relationship for packet forwarding between upstream nodes A1 and A2 and downstream node B may be:
(A1,1) -- (B,3), (A2,1) -- (B,3);
(A1,2) -- (B,2), (A2,2) -- (B,2).

For the above corresponding relationship, since queue 3 of downstream node B may receive packets at once from queue 1 of upstream node A1 and queue 1 of upstream node A2 or completely receive packets from queue 1 of upstream node A1 and queue 1 of upstream node A2, packets from queue 1 of upstream node A1 and queue 1 of upstream node A2 may be non-sequentially sent to queue 3 of downstream node B. Since queue 2 of downstream node B may receive packets at once from queue 2 of upstream node A1 and queue 2 of upstream node A2 or completely receive packets from queue 2 of upstream node A1 and queue 2 of upstream node A2, packets from queue 2 of upstream node A1 and queue 2 of upstream node A2 may be non-sequentially sent to queue 2 of downstream node B.

### Policy 2

This Policy 2 corresponds to a situation where one queue of the downstream network node is not capable of receiving packets at once from queues of a plurality of upstream network nodes or completely receiving packets from the queues of a plurality of upstream network nodes.

In some embodiments, the above operation 32 may include: in a case where it is determined that packets in queues of the plurality of upstream network nodes are not able to be received at once by one queue of the downstream network node based on the queue information of the plurality of upstream network nodes and the queue information of the downstream network node, the downstream network node determining the packet sending policy from the plurality of upstream network nodes to the downstream network node may include: sequentially or non-sequentially sending the packets from the corresponding queues of the plurality of upstream network nodes.

In some embodiments, in a case where the packet sending policy includes sequentially sending the packets from the corresponding queues of the plurality of upstream network nodes, the packet sending policy may include: a start packet in the queue of each of the plurality of upstream network nodes carrying a start identifier, and an end packet in the queue of each of the plurality of upstream network nodes carrying an end identifier, the start identifier being configured to identify the start of sending of the packet in the corresponding queue, and the end identifier being configured to identify the end of sending of the packet in the corresponding queue. Thus, with the help of the start identifier, the start packet in the corresponding queue may be identified, and with the help of the end identifier, the end packet in the corresponding queue may be identified, thereby ensuring sequential sending of packets.

For example, as shown in FIG. 4B, upstream node A1 may include queue 1 and queue 2, upstream node A2 may include queue 1 and queue 2, and downstream node B may include queue 1, queue 2, and queue 3. Moreover, packets from queue 1 (may be represented as: (A1,1)) of upstream node A2 may be sent to queue 3 (may be represented as: (B,3)) and queue 2 (may be represented as: (B,2)) of downstream node B. However, packets from upstream nodes A1 and A2 may be completely received by queue 3 and queue 2 of downstream node B, and no more packets enter queue 1 of downstream node B.

For the above situation, the corresponding policy is that the upstream node may sequentially or non-sequentially send packets in the current queue. In this case, packets from a queue of an upstream node may exist in a plurality of queues of a downstream node, for example, packets from queue 1 of upstream node A2 may be sent to queue 3 and queue 2 of downstream node B.
1) For sequential sending, it may be that (A1,1) finishes sending, then (A2,1) sends. The corresponding overall sending sequence is as follows:
   (A1,1)--(B,3)--(C1,1)
   (A2,1)--(B,3)--(C2,1)
   (A2,1)--(B,2)--(C2,1)
   (A1,2)--(B,2)--(C1,2)
   (A2,2)--(B,2)--(C2,2)
   In this case, the start packets and the end packets in (A1,1) and (A2,1) carry information such as an internet protocol (IP) address and a cycle identifier (cycle id), each of the start packets in (A1,1) and (A2,1) is required to carry a start identifier, and each of the end packets in (A1,1) and (A2,1) is required to carry an end identifier, to ensure sequential sending of packets.
(2) For non-sequential sending, (A1,1) and (A2,1) may be non-sequentially sent.

### Policy 3

This policy 3 corresponds to a situation where one queue of the downstream network node is not capable of receiving packets at once from queues of a plurality of upstream network nodes or completely receiving packets from the queues of a plurality of upstream network nodes, and the total amount of packets in sending queues of the plurality of upstream network nodes exceeds the carrying capacity of the corresponding queues of the downstream network node.

In some embodiments, the above operation 32 may include: in a case where it is determined that packets in queues of the plurality of upstream network nodes are not able to be received at once by one queue of the downstream network node and the total amount of packets in sending queues of the plurality of upstream network nodes exceeds the carrying capacity of corresponding queues of the downstream network node based on the queue information of the plurality of upstream network nodes and the queue information of the downstream network node, the downstream network node determining the packet sending policy from the plurality of upstream network nodes to the downstream network node may include: sequentially sending the packets from the corresponding queues of the plurality of upstream network nodes. In this way, deterministic transmission of packets may be guaranteed, and delay accumulation may be reduced.

In some embodiments, the packet sending policy may include: a start packet in a queue of each of the plurality of upstream network nodes carrying a start identifier, and an end packet in a queue of each of the plurality of upstream network nodes carrying an end identifier. Thus, with the help of the start identifier, the start packet in the corresponding queue may be identified, and with the help of the end identifier, the end packet in the corresponding queue may be identified, thereby ensuring sequential sending of packets.

For example, as shown in FIG. 4C, upstream node A1 may include queue 1 and queue 2, upstream node A2 may include queue 1 and queue 2, and downstream node B may include queue 1, queue 2, and queue 3. Moreover, the total amount of packets in queue 1 and queue 2 of upstream node A1 and queue 1 and queue 2 of upstream node A2 exceeds the carrying capacity of queue 2 and queue 3 of downstream node B.

For the above situation, the corresponding policy is that the upstream nodes sequentially send packets in the current queues. For example, (A1,1) finishes sending, then (A2,1) sends. The start packets and the end packets in (A1,1) and (A2,1) carry information such as a IP address and a cycle id, each of the start packets in (A1,1) and (A2,1) is required to carry a start identifier, and each of the end packets in (A1,1) and (A2,1) is required to carry an end identifier, to ensure sequential sending of packets.

In this case, packets from a queue of an upstream node may exist in a plurality of queues of the downstream node, for example, packets from queue 2 of upstream node A2 may be sent to queue 2 and queue 1 of downstream node B.

From the above three policies, it may be seen that as the forwarding situation becomes complex, sequential sending of packets between a plurality of network nodes is required to be negotiated in advance. Before deterministic packet forwarding, resource reservation is required, and the RSVP protocol may be used. In some embodiments, the resource reservation process may be shown in FIG. 2.

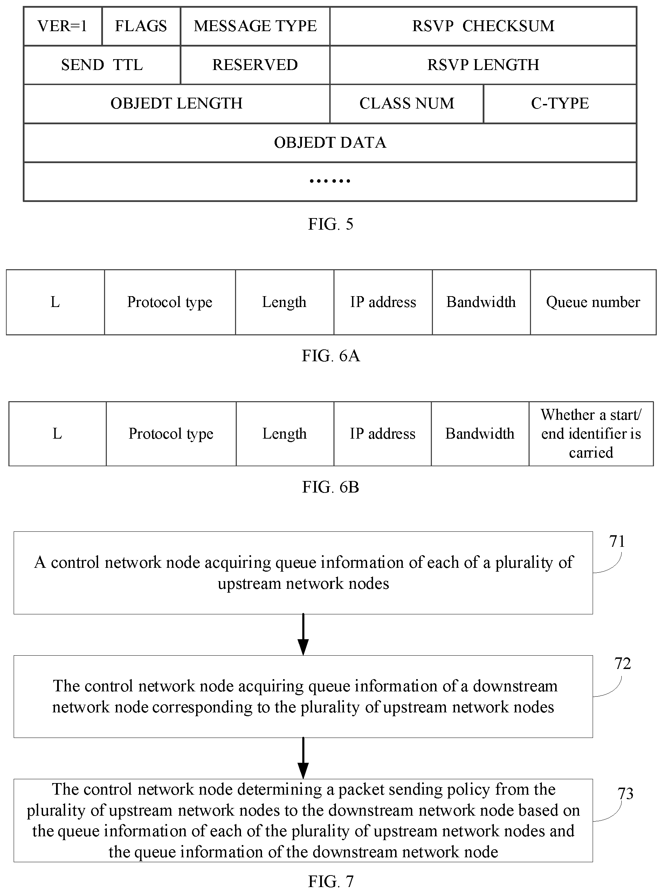

In some embodiments, a new type of reservation object and rule may be defined by extending an object in the RSVP. For example, the RSVP-TE protocol format may be shown in FIG. 5. The protocol header part at least may include:
- VER, 4 bytes, indicating the version number; for example, 1 indicates the current version;
- FLAGS, 4 bytes, default value;
- MESSAGE TYPE, including types such as Path, Resv establishment and teardown;
- RSVP CHECKSUM, indicating the checksum;
- SEND TTL, indicating detection of whether the device supports RSVP;
- RESERVED, reserved field;
- RSVP LENGTH, indicating the packet length.

The solutions in some embodiments of the present disclosure may extend the object, and the length is variable, so that the resource reservation packet (such as the first packet and the second packet mentioned above) carries queue information or an identifier configured to indicate the packet sending policy. In this case, a new CLASS NUM equal to 30 may be redefined, where CLASS NUM indicates the class name.

For example, for the first packet, such as a PATH packet, the first packet may be sent from the client, may carry "queue number" information, and may be used in conjunction with a bandwidth, to inform the downstream network node of its own queue situation, so that the downstream network node may determine whether "sequential sending" is required. As shown in FIG. 6A, the structure of the PATH packet may carry L, a protocol type, a packet length, an IP address, a bandwidth, and a queue number; such as [L=0, IPv4, 64, 10.0.0.1, bandwidth 1, 2], or [L=0, IPv4, 64, 10.0.0.2, bandwidth 2, 3].

For the second packet, such as a RESV packet, the second packet may be returned from the server side. After it is determined whether "sequential sending" is required, in a case of being required, the upstream network node may be informed that the upstream network node is required to enable the packets at the start of the queue and end of the queue to carry identifiers. For example, the start packet may carry a start identifier s, and the end packet may carry an end identifier e. As shown in FIG. 6B, the structure of the RESV packet may carry L, a protocol type, a packet length, an IP address, a bandwidth, and indication information of whether a start/end identifier is carried, such as [L=0, IPv4, 64, 10.0.0.1, bandwidth 1, 0], or [L=0, IPv4, 64, 10.0.0.2, bandwidth 2, 1], where the indication information '0' indicates not carrying a start/end identifier, and the indication information '1' indicates carrying a start/end identifier.

In some embodiments, the policy determination method may include:
the downstream network node receiving a first start packet from a queue of a first upstream network node, the first upstream network node being one of the plurality of upstream network nodes; and
in a case where the first start packet does not carry a start identifier, the downstream network node non-sequentially receiving packets sent from the plurality of upstream network nodes, and
performing queued forwarding via a sending queue; or in a case where the first start packet carries a start identifier, the downstream network node sequentially sending packets received from the plurality of upstream network nodes via the sending queue.

Thus, whether the packets from the queues of the upstream network nodes are sequentially received may be determined with the help of the start identifier.

In some embodiments of the present disclosure, besides the downstream network node/convergence network node determining the packet sending policy from the plurality of upstream network nodes to the downstream network node, a control network node (such as a controller) may determine the packet sending policy from the plurality of upstream network nodes to the downstream network node, which is described as follows.

Please refer to FIG. 7. FIG. 7 is a flowchart of a policy determination method according to some embodiments of the present disclosure. The method may be performed by a control network node, such as a controller. As shown in FIG. 7, the method may include the following operations.

An operation 71 may include: a control network node acquiring queue information of each of a plurality of upstream network nodes.

An operation 72 may include: the control network node acquiring queue information of a downstream network node corresponding to the plurality of upstream network nodes.

An operation 73 may include: the control network node determining a packet sending policy from the plurality of upstream network nodes to the downstream network node based on the queue information of each of the plurality of upstream network nodes and the queue information of the downstream network node.

In some embodiments, the queue information may include the number of queues.

In some embodiments, after determining the packet sending policy from the plurality of upstream network nodes to the downstream network node, the packet sending policy may be sent to each upstream network node and the downstream network node respectively, so that each upstream network node and the downstream network node send and receive packets based on the packet sending policy.

Thus, with the solutions in some embodiments of the present disclosure, the control network node may be performed capability enhancement, so that the control network node determines the packet sending policy from the plurality of upstream network nodes to the downstream network node by identifying the capabilities of upstream queues and downstream queues, thereby guaranteeing deterministic transmission of packets during multi-path convergence.

In some embodiments of the present disclosure, different packet sending policies may be formed based on different capabilities of upstream queues and downstream queues, which are described as follows.

### Policy 1

This policy 1 corresponds to an optimal situation, and one queue of the downstream network node may receive packets at once from queues of a plurality of upstream network nodes or completely receive packets from the queues of a plurality of upstream network nodes.

In some embodiments, the above operation 73 may include: in a case where it is determined that packets in queues of the plurality of upstream network nodes are able to be received at once by one queue of the downstream network node based on the queue information of each of the plurality of upstream network nodes and the queue information of the downstream network node, the control network node determining the packet sending policy from the plurality of upstream network nodes to the downstream network node may include: non-sequentially sending the packets from the corresponding queues of the plurality of upstream network nodes to the one queue of the downstream network node. That is, the corresponding queues of a plurality of upstream network nodes are merged into one queue, and the sending sequence is not required to be considered. Thus, the upstream network nodes are not required to sequentially send packets of the current queue, and the packets in the queues of the upstream network nodes are not sent to a plurality of queues of the downstream network node, thereby reducing resource waste.

An example under policy 1 is shown in FIG. 4A, and the description may refer to the above embodiments, which is not repeated here.

### Policy 2

This Policy 2 corresponds to a situation where one queue of the downstream network node is not capable of receiving packets at once from queues of a plurality of upstream network nodes or completely receiving packets from the queues of a plurality of upstream network nodes.

In some embodiments, the above operation 73 may include: in a case where it is determined that packets in queues of the plurality of upstream network nodes are not able to be received at once by one queue of the downstream network node based on the queue information of each of the plurality of upstream network nodes and the queue information of the downstream network node, the control network node determining the packet sending policy from the plurality of upstream network nodes to the downstream network node may include: sequentially or non-sequentially sending the packets from the corresponding queues of the plurality of upstream network nodes.

In some embodiments, in a case where the packet sending policy includes sequentially sending the packets from the corresponding queues of the plurality of upstream network nodes, the packet sending policy may include: a start packet in the queue of each of the plurality of upstream network nodes carrying a start identifier, and an end packet in the queue of each of the plurality of upstream network nodes carrying an end identifier, the start identifier being configured to identify the start of sending of the packet in the corresponding queue, and the end identifier being configured to identify the end of sending of the packet in the corresponding queue. Thus, with the help of the start identifier, the start packet in the corresponding queue may be identified, and with the help of the end identifier, the end packet in the corresponding queue may be identified, thereby ensuring sequential sending of packets.

An example under policy 2 is shown in FIG. 4B, and the description may refer to the above embodiments, which is not repeated here.

### Policy 3

This policy 3 corresponds to a situation where one queue of the downstream network node is not capable of receiving packets at once from queues of a plurality of upstream network nodes or completely receiving packets from the queues of a plurality of upstream network nodes, and the total amount of packets in sending queues of the plurality of upstream network nodes exceeds the carrying capacity of the corresponding queues of the downstream network node.

In some embodiments, the above operation 73 may include: in a case where it is determined that packets in queues of the plurality of upstream network nodes are not able to be received at once by one queue of the downstream network node and the total amount of packets in sending queues of the plurality of upstream network nodes exceeds the carrying capacity of corresponding queues of the downstream network node based on the queue information of each of the plurality of upstream network nodes and the queue information of the downstream network node, the control network node determining the packet sending policy from the plurality of upstream network nodes to the downstream network node may include: sequentially sending the packets from the corresponding queues of the plurality of upstream network nodes.

In some embodiments, the packet sending policy may include: a start packet in a queue of each of the plurality of upstream network nodes may carry a start identifier, and an end packet in a queue of each of the plurality of upstream network nodes may carry an end identifier. Thus, with the help of the start identifier, the start packet in the corresponding queue may be identified, and with the help of the end identifier, the end packet in the corresponding queue may be identified, thereby ensuring sequential sending of packets.

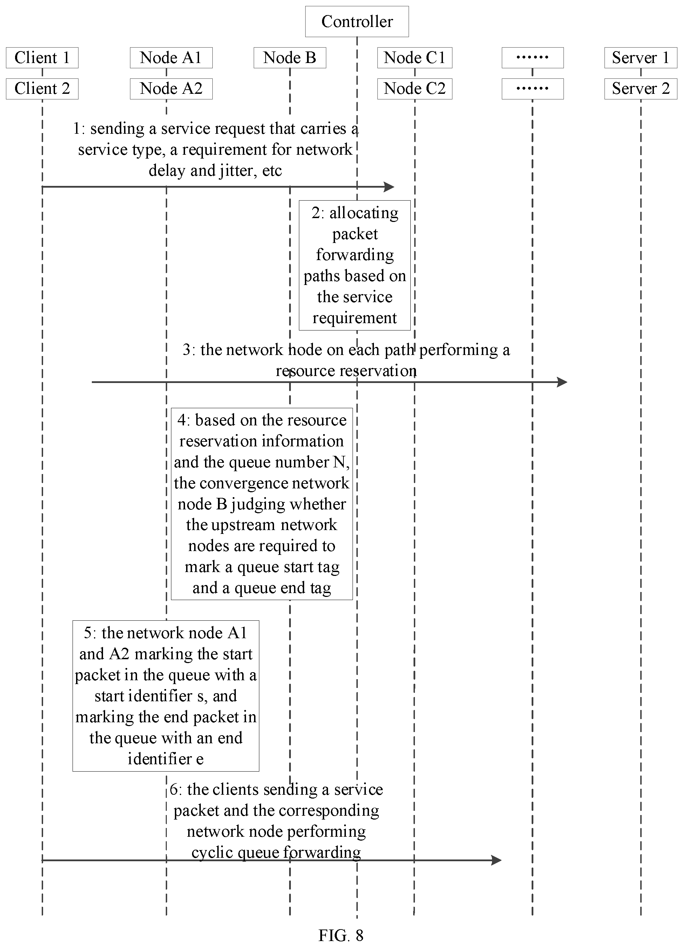

Some embodiments of the present disclosure are described in detail below with reference to FIG. 8.

As shown in FIG. 8, a packet transmission process based on some embodiments of the present disclosure may include following operations.

An operation S1 may include: clients (such as client 1 and client 2) sending a service request, service request carrying a service type, a requirement for network delay and jitter, etc.

An operation S2 may include: a controller allocating packet forwarding paths based on the service requirement. For example, as shown in FIG. 8, four packet forwarding paths may be allocated, i.e., network node A1 - network node B - network node C1 ... server 1; network node A1 - network node B - network node C2 ... server 1; network node A2 - network node B - network node C2 ... server 2; network node A2 - network node B - network node C2 ... server 2.

An operation S3 may include: the network node on each path performing a resource reservation process, and the resource reservation packet being required to carry the corresponding queue number N.

An operation S4 may include: based on the resource reservation information and the queue number N, the convergence network node B judging whether the upstream network nodes are required to mark a queue start tag and a queue end tag and deciding whether the resource reservation RESV packet carries the start identifier and the end identifier when the resource reservation RESV packet is returned; in a case where the upstream network nodes are not required to mark a queue start tag and a queue end tag, an operation S6 being performed; in a case where the upstream network nodes are required to mark a queue start tag and a queue end tag, an operation S5 being performed.

An operation S5 may include: the network node A1/A2 marking the packet in the queue of network node A1/A2 with a cycle id, marking the start packet in the queue with a start identifier s, and marking the end packet in the queue with an end identifier e.

An operation S6 may include: the clients sending a service packet; and the corresponding network node (such as network nodes A1/A2) marking a corresponding parameter such as a cycle id and performing cyclic queue forwarding:
(a) in a case where the start packet in the queue does not have an identifier s, there being no need to restrict the reception of packets from other upstream network nodes, and the packets being non-sequentially received in the buffer and being performed queued forwarding via the sending queue.
(b) in a case where the start packet of the queue has an identifier s, it being necessary to restrict the reception of packets from other upstream network nodes, or the packets being temporarily stored in the buffer, enabling the sending queue to sequentially send packets received from different upstream network nodes.

It should be noted that the performing subject of the policy determination method provided in some embodiments of the present disclosure may be a policy determination apparatus, or a control module in the policy determination apparatus that is configured to perform the policy determination method. In some embodiments of the present disclosure, the policy determination apparatus performing the policy determination method is taken as an example to illustrate the policy determination apparatus provided in some embodiments of the present disclosure.

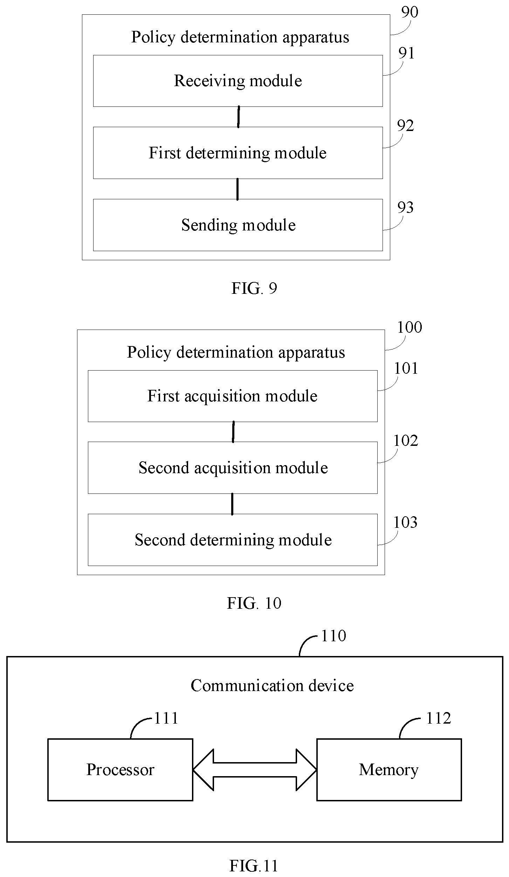

Please refer to FIG. 9. FIG. 9 is a structural schematic diagram of a policy determination apparatus according to some embodiments of the present disclosure. The apparatus may be applied to a downstream network node/convergence network node. As shown in FIG. 9, the policy determination apparatus 90 may include following modules.

A receiving module 91 may be configured to perform receiving a plurality of first packets sent from a plurality of upstream network nodes, each of the plurality of first packets including queue information of a corresponding upstream network node of the plurality of upstream network nodes.

A first determining module 92 may be configured to perform determining a packet sending policy from the plurality of upstream network nodes to a downstream network node based on the queue information of the plurality of upstream network nodes and queue information of the downstream network node corresponding to the plurality of upstream network nodes.

A sending module 93 may be configured to perform sending a second packet to the plurality of upstream network nodes respectively, the second packet including an identifier configured to indicate the packet sending policy.

In some embodiments, the first determining module 92 may be configured to perform: in a case where it is determined that packets in queues of the plurality of upstream network nodes are able to be received at once by one queue of the downstream network node based on the queue information of the plurality of upstream network nodes and the queue information of the downstream network node, the downstream network node determining the packet sending policy from the plurality of upstream network nodes to the downstream network node may include: non-sequentially sending the packets from the corresponding queues of the plurality of upstream network nodes to the one queue of the downstream network node.

In some embodiments, the first determining module 92 may be configured to perform: in a case where it is determined that packets in queues of the plurality of upstream network nodes are not able to be received at once by one queue of the downstream network node based on the queue information of the plurality of upstream network nodes and the queue information of the downstream network node, the downstream network node determining the packet sending policy from the plurality of upstream network nodes to the downstream network node may include: sequentially or non-sequentially sending the packets from the corresponding queues of the plurality of upstream network nodes.

In some embodiments, the first determining module 92 may be configured to perform: in a case where it is determined that packets in queues of the plurality of upstream network nodes are not able to be received at once by one queue of the downstream network node and the total amount of packets in sending queues of the plurality of upstream network nodes exceeds the carrying capacity of corresponding queues of the downstream network node based on the queue information of the plurality of upstream network nodes and the queue information of the downstream network node, the downstream network node determining the packet sending policy from the plurality of upstream network nodes to the downstream network node may include: sequentially sending the packets from the corresponding queues of the plurality of upstream network nodes.

In some embodiments, in a case where the packet sending policy includes sequentially sending packets from the corresponding queues of the plurality of upstream network nodes, the packet sending policy may include: a start packet in the queue of each of the plurality of upstream network nodes carrying a start identifier, and an end packet in the queue of each of the plurality of upstream network nodes carrying an end identifier.

In some embodiments, the receiving module 91 may be configured to perform: the downstream network node receiving a first start packet from a queue of a first upstream network node, the first upstream network node being one of the plurality of upstream network nodes.

The sending module 93 may be configured to perform: in a case where the first start packet does not carry a start identifier, the downstream network node non-sequentially receiving packets sent from the plurality of upstream network nodes, and performing queued forwarding via a sending queue; or in a case where the first start packet carries a start identifier, the downstream network node sequentially sending packets received from the plurality of upstream network nodes via the sending queue.

In some embodiments, the queue information may include the number of queues.

The policy determination apparatus 90 in some embodiments of the present disclosure may implement all processes of the method embodiment shown in FIG. 3 and achieve the same technical effects. To avoid repetition, details are not repeated here.

Please refer to FIG. 10. FIG. 10 is a structural schematic diagram of a policy determination apparatus according to some embodiments of the present disclosure. The apparatus may be applied to a control network node. As shown in FIG. 10, the policy determination apparatus 100 may include following modules.

A first acquisition module 101 may be configured to perform: acquiring queue information of each of a plurality of upstream network nodes.

A second acquisition module 102 may be configured to perform: acquiring queue information of a downstream network node corresponding to the plurality of upstream network nodes.

A second determining module 103 may be configured to perform: determining a packet sending policy from the plurality of upstream network nodes to the downstream network node based on the queue information of each of the plurality of upstream network nodes and the queue information of the downstream network node.

In some embodiments, the second determining module 103 may be configured to perform: in a case where it is determined that packets in queues of the plurality of upstream network nodes are able to be received at once by one queue of the downstream network node based on the queue information of each of the plurality of upstream network nodes and the queue information of the downstream network node, the control network node determining the packet sending policy from the plurality of upstream network nodes to the downstream network node may include: non-sequentially sending the packets from the corresponding queues of the plurality of upstream network nodes to the one queue of the downstream network node.

In some embodiments, the second determining module 103 may be configured to perform: in a case where it is determined that packets in queues of the plurality of upstream network nodes are not able to be received at once by one queue of the downstream network node based on the queue information of each of the plurality of upstream network nodes and the queue information of the downstream network node, the control network node determining the packet sending policy from the plurality of upstream network nodes to the downstream network node may include: sequentially or non-sequentially sending the packets from the corresponding queues of the plurality of upstream network nodes.

In some embodiments, the second determining module 103 may be configured to: in a case where it is determined that packets in queues of the plurality of upstream network nodes are not able to be received at once by one queue of the downstream network node and the total amount of packets in sending queues of the plurality of upstream network nodes exceeds the carrying capacity of corresponding queues of the downstream network node based on the queue information of each of the plurality of upstream network nodes and the queue information of the downstream network node, the control network node determining the packet sending policy from the plurality of upstream network nodes to the downstream network node may include: sequentially sending the packets from the corresponding queues of the plurality of upstream network nodes.

In some embodiments, in a case where the packet sending policy includes sequentially sending packets from the corresponding queues of the plurality of upstream network nodes, the packet sending policy may include: a start packet in the queue of each of the plurality of upstream network nodes carrying a start identifier, and an end packet in the queue of each of the plurality of upstream network nodes carrying an end identifier

In some embodiments, the queue information may include the number of queues.

The policy determination apparatus 100 in some embodiments of the present disclosure may implement all processes of the method embodiment shown in FIG. 7 and achieve the same technical effects. To avoid repetition, details are not repeated here.

In some embodiments, as shown in FIG. 11, some embodiments of the present disclosure may provide a communication device 110, including a processor 111, a memory 112, and a program or an instruction stored in the memory 112 and executable on the processor 111. For example, in a case where the communication device 110 is a downstream network node, the program or instruction, when executed by the processor 111, may implement all processes of the policy determination method embodiments shown in FIG. 3 and achieve the same technical effects. In a case where the communication device 110 is a control network node, the program or instruction, when executed by the processor 111, may implement all processes of the policy determination method embodiments shown in FIG. 7 and achieve the same technical effects. To avoid repetition, details are not repeated here.

Some embodiments of the present disclosure may provide a readable storage medium, on which a program or an instruction is stored. The program or instruction, when executed by a processor, may implement all processes of the above policy determination method embodiments and achieve the same technical effects. To avoid repetition, details are not repeated here.

A computer-readable medium may include a permanent medium, a non-permanent medium, a removable medium and a non-removable medium, and information storage may be implemented by any method or technology. The information may be computer-readable instructions, data structures, modules of programs, or other data. An example of a computer storage medium may include, but is not limited to, a phase-change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD-ROM), a digital video disc (DVD) or other optical storage, a magnetic cassette, a magnetic tape storage or other magnetic storage devices, or any other non-transmission media that may be used to store information that may be accessed by a computing device. As defined herein, the computer-readable medium does not include a transitory computer-readable medium, such as a modulated data signal and a carrier wave.

It should be noted that, in this description, the terms "comprise", "include", or any other variation thereof are intended to cover a non-exclusive inclusion, so that a process, method, product, or apparatus that may include a list of elements may include not only those elements but also other elements not expressly listed, or also may include elements inherent to such process, method, product, or apparatus. Without further limitation, an element defined by the phrase "including a..." does not preclude the presence of additional identical elements in the process, method, product, or apparatus that may include the element.

The above serial numbers of the embodiments of the present disclosure are only for description and do not represent the advantages or disadvantages of the embodiments.

From the above description of the implementations, it will be clear to those skilled in the art that the methods of the above embodiments may be implemented by means of software plus the necessary general hardware platform, and of course also by hardware, but in many cases the former is a better implementation. Based on such understanding, the technical solutions of the present disclosure essentially, or the part that contributes to the prior art, may be embodied in the form of a software product stored in a storage medium (such as ROM/RAM, magnetic disk, optical disk), including instructions for causing a service classification device (which may be a mobile phone, a computer, a server, an air conditioner, or a network device, etc.) to perform the methods described in the embodiments of the present disclosure.

The above are only some embodiments of the present disclosure. It should be pointed out that for those of ordinary skill in the art, several improvements and modifications may be made without departing from the principles of the present disclosure, and these improvements and modifications should also be regarded as the scope of the present disclosure.

## Claims

1. A policy determination method, comprising:
receiving, by a downstream network node, a plurality of first packets sent from a plurality of upstream network nodes, each first packet comprising queue information of a corresponding upstream network node of the plurality of upstream network nodes;
determining, by the downstream network node, a packet sending policy from the plurality of upstream network nodes to the downstream network node based on the queue information of the plurality of upstream network nodes and queue information of the downstream network node; and
sending, by the downstream network node, a second packet to the plurality of upstream network nodes respectively, the second packet comprising an identifier configured to indicate the packet sending policy.

2. The method according to claim 1, wherein determining the packet sending policy from the plurality of upstream network nodes to the downstream network node based on the queue information of the plurality of upstream network nodes and the queue information of the downstream network node, comprises:
in a case where it is determined that packets in queues of the plurality of upstream network nodes are able to be received at once by one queue of the downstream network node based on the queue information of the plurality of upstream network nodes and the queue information of the downstream network node, determining, by the downstream network node, the packet sending policy comprises: non-sequentially sending the packets from corresponding queues of the plurality of upstream network nodes to the one queue of the downstream network node.

3. The method according to claim 1, wherein determining the packet sending policy from the plurality of upstream network nodes to the downstream network node based on the queue information of the plurality of upstream network nodes and the queue information of the downstream network node, comprises:
in a case where it is determined that packets in queues of the plurality of upstream network nodes are not able to be received at once by one queue of the downstream network node based on the queue information of the plurality of upstream network nodes and the queue information of the downstream network node, determining, by the downstream network node, the packet sending policy comprises: sequentially or non-sequentially sending the packets from corresponding queues of the plurality of upstream network nodes.

4. The method according to claim 1, wherein determining the packet sending policy from the plurality of upstream network nodes to the downstream network node based on the queue information of the plurality of upstream network nodes and the queue information of the downstream network node, comprises:
in a case where it is determined that packets in queues of the plurality of upstream network nodes are not able to be received at once by one queue of the downstream network node, and a total amount of packets in sending queues of the plurality of upstream network nodes exceeds a carrying capacity of corresponding queues of the downstream network node based on the queue information of the plurality of upstream network nodes and the queue information of the downstream network node, determining, by the downstream network node, the packet sending policy comprises: sequentially sending the packets from corresponding queues of the plurality of upstream network nodes.

5. The method according to claim 3 or 4, wherein in a case where the packet sending policy comprises: sequentially sending the packets from the corresponding queues of the plurality of upstream network nodes, the packet sending policy further comprises: a start packet in a queue of each of the plurality of upstream network nodes carrying a start identifier, and an end packet in a queue of each of the plurality of upstream network nodes carrying an end identifier.

6. The method according to claim 5, further comprising:
receiving, by the downstream network node, a first start packet from a queue of a first upstream network node, the first upstream network node being one of the plurality of upstream network nodes;
in a case where the first start packet does not carry the start identifier, non-sequentially receiving, by the downstream network node, the packets sent from the plurality of upstream network nodes, and performing queued forwarding via sending queues; or in a case where the first start packet carries the start identifier, sequentially sending, by the downstream network node, the packets received from the plurality of upstream network nodes via the sending queues.

7. The method according to any one of claims 1 to 4, wherein the queue information comprises a number of queues.

8. A policy determination method, comprising:
acquiring, by a control network node, queue information of each of a plurality of upstream network nodes;
acquiring, by the control network node, queue information of a downstream network node corresponding to the plurality of upstream network nodes; and
determining, by the control network node, a packet sending policy from the plurality of upstream network nodes to the downstream network node based on the queue information of each of the plurality of upstream network nodes and the queue information of the downstream network node.

9. The method according to claim 8, wherein determining the packet sending policy from the plurality of upstream network nodes to the downstream network node based on the queue information of each of the plurality of upstream network nodes and the queue information of the downstream network node, comprises:
in a case where it is determined that packets in queues of the plurality of upstream network nodes are able to be received at once by one queue of the downstream network node based on the queue information of each of the plurality of upstream network nodes and the queue information of the downstream network node, determining, by the control network node, the packet sending policy comprises: non-sequentially sending the packets from corresponding queues of the plurality of upstream network nodes to the one queue of the downstream network node.

10. The method according to claim 8, wherein determining the packet sending policy from the plurality of upstream network nodes to the downstream network node based on the queue information of each of the plurality of upstream network nodes and the queue information of the downstream network node, comprises:
in a case where it is determined that packets in queues of the plurality of upstream network nodes are not able to be received at once by one queue of the downstream network node based on the queue information of each of the plurality of upstream network nodes and the queue information of the downstream network node, determining, by the control network node, the packet sending policy comprises: sequentially or non-sequentially sending the packets from corresponding queues of the plurality of upstream network nodes.

11. The method according to claim 8, wherein determining the packet sending policy from the plurality of upstream network nodes to the downstream network node based on the queue information of each of the plurality of upstream network nodes and the queue information of the downstream network node, comprises:
in a case where it is determined that packets in queues of the plurality of upstream network nodes are not able to be received at once by one queue of the downstream network node, and a total amount of packets in sending queues of the plurality of upstream network nodes exceeds a carrying capacity of corresponding queues of the downstream network node based on the queue information of each of the plurality of upstream network nodes and the queue information of the downstream network node, determining, by the control network node, the packet sending policy comprises: sequentially sending the packets from corresponding queues of the plurality of upstream network nodes.

12. The method according to claim 10 or 11, wherein in a case where the packet sending policy comprises sequentially sending the packets from corresponding queues of the plurality of upstream network nodes, the packet sending policy further comprises: a start packet in a queue of each of the plurality of upstream network nodes carrying a start identifier, and an end packet in a queue of each of the plurality of upstream network nodes carrying an end identifier..

13. The method according to any one of claims 8 to 11, wherein the queue information comprises a number of queues.

14. A policy determination apparatus, comprising:
a receiving module, configured to receive a plurality of first packets sent from a plurality of upstream network nodes; wherein each of the first packets comprises queue information of a corresponding upstream network node of the plurality of upstream network nodes;
a first determining module, configured to determine a packet sending policy from the plurality of upstream network nodes to a downstream network node based on the queue information of the plurality of upstream network nodes and queue information of the downstream network node corresponding to the plurality of upstream network nodes; and
a sending module, configured to send a second packet to the plurality of upstream network nodes respectively; wherein the second packet comprises an identifier configured to indicate the packet sending policy.

15. A policy determination apparatus, comprising:
a first acquisition module, configured to acquire queue information of each of a plurality of upstream network nodes;
a second acquisition module, configured to acquire queue information of a downstream network node corresponding to the plurality of upstream network nodes; and
a second determining module, configured to determine a packet sending policy from the plurality of upstream network nodes to the downstream network node based on the queue information of each of the plurality of upstream network nodes and the queue information of the downstream network node.

16. A communication device, comprising a processor, a memory, and a program or an instruction stored in the memory and executable on the processor; wherein the program or the instruction, when executed by the processor, implements the operations of the policy determination method according to any one of claims 1 to 7, or implements the operations of the policy determination method according to any one of claims 8 to 13.

17. A readable storage medium, storing a program or an instruction; wherein the program or the instruction, when executed by a processor, implements the operations of the policy determination method according to any one of claims 1 to 7, or implements the operations of the policy determination method according to any one of claims 8 to 13.
